# EUROPEAN PATENT SPECIFICATION

(11) **EP 3 298 922 B1**
(45) Date of publication and mention of the grant of the patent: **15.05.2019**
(21) Application number: 17191880.8
(22) Date of filing: 19.09.2017
(51) Int. Cl.: A44B 11/25, B64D 17/32

(54) **A SAFETY BELT FOR RACING VEHICLES**
SICHERHEITSGURT FÜR RENNFAHRZEUGE
CEINTURE DE SÉCURITÉ POUR VOITURES DE COURSE

(30) Priority: 21.09.2016 IT 201600094766
(43) Date of publication of application: 28.03.2018
(73) Proprietor: Sabelt S.p.A., 10129 Torino (IT)
(72) Inventor: ANDERLINI, Stefano, I-16134 GENOVA (IT)
(74) Representative: Fioravanti, Corrado

(56) References cited:
- BE-A- 371 454
- GB-A- 1 138 871
- US-A- 2 921 353

## Description

### Technical field

The present invention relates to a safety belt, particularly for sports cars or other racing vehicles.

### Prior art

As is known, safety belts are provided inside motor vehicles, directly or indirectly anchored to the body of the motor vehicle. Safety belts are used to hold the driver against his/her seat in case of sudden deceleration.

In racing vehicles, the various safety belt straps serve to immobilize the shoulders, the pelvis and the legs of the driver. The various straps of the safety belt are connectable at a single point, usually in front of the torso and at the height of the driver's pelvis, by means of a buckle which allows the locking and the simultaneous release of the straps.

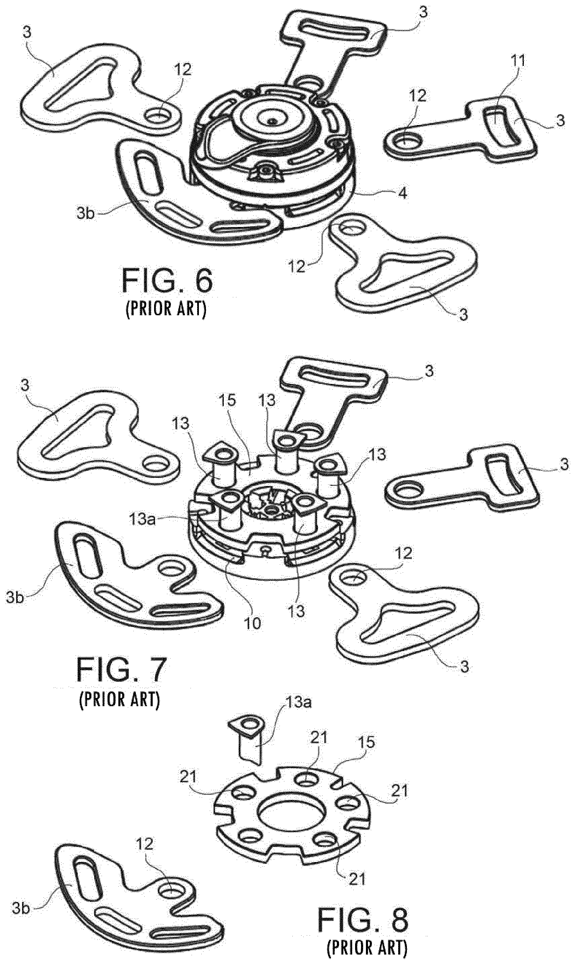

For a better understanding of the state of the art and the problems inherent thereof, a conventional safety belt for racing vehicles will be described first, as illustrated in figures 6 to 8 of the accompanying drawings.

The buckle comprises a casing 4, which houses a locking and release mechanism which may be manually activated to cause the simultaneous release of the tongues 3 of the safety belt straps, with the exception of the tongue 3b of one strap, generally the thigh strap. The locking and release mechanism comprises a series of longitudinal retaining pins 13, each of which is engaged through a respective through hole 12 formed on each of the tongues of the safety belt.

According to the regulations in force, all the straps of the belt may be separated from the buckle. According to the intended use, however, one strap may remain locked to the buckle, therefore, as is often the case, the fixed strap may remain locked to the buckle. This causes the tongue 3b of the fixed strap to remain permanently locked to the buckle even when the buckle is in the open condition and all the other tongues are released by the buckle.

Inside the casing of the buckle, an annular retaining disc 15 is mounted wherein a series of through holes 21 are formed in circumferentially spaced positions. Each through hole serves to allow passage of a respective longitudinal retaining pin 13, which locks a respective tongue of the safety belt to the buckle. With the exception of the longitudinal pin 13a, which locks the tongue 3b of the fixed strap, all the other pins are longitudinally releasable from the tongues and from the annular retaining disc 15, due to the locking and release mechanism. The annular retaining disc serves to distribute or allocate to all the pins of the mechanism the tensile forces transmitted by each individual strap of the belt to the respective pin to which the tongue of that strap is attached.

Recently introduced standards in force require the tongues to withstand particularly high tensile loads.

US 2 921 353 A discloses a safety belt according to the preamble of claim 1.

### Summary of the invention

The object of the present invention is therefore to provide a safety belt for a sports car that mainly addresses the problem of making a buckle with a particularly high mechanical strength for the tongues without, however, increasing the weight of the buckle or the safety belt as a whole.

The aforementioned and other objects and advantages are achieved by a safety belt having the features set forth in claim 1. Preferential embodiments of the invention are defined in the dependent claims.

### Brief description of the drawings

The features and advantages of the safety belt according to the present invention will be apparent from the description hereinafter, provided by way of non-limiting example. Reference is made to the accompanying drawings, wherein:
- figure 1 is a perspective view of a buckle of a safety belt according to an embodiment of the invention in the open condition with all the tongues unlocked from the buckle except for one;
- figure 2 is a perspective view of the buckle of figure 1 with the tongues locked;
- figure 3 is a cross-sectional view of the buckle and the tongues of figure 2 with some components removed for illustrative purposes;

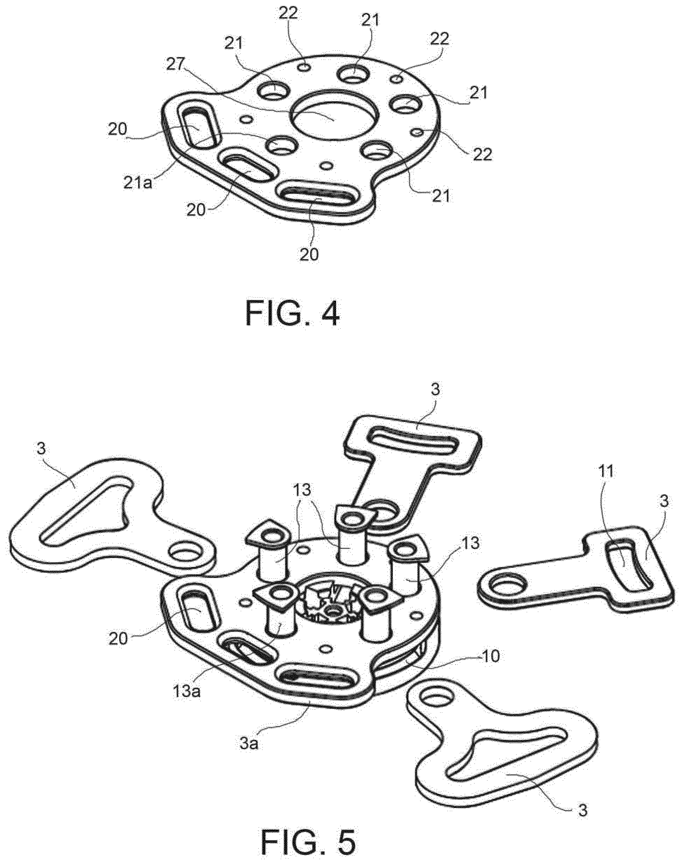

- figure 4 is a view of the tongue of the fixed strap;
- figure 5 is a perspective view similar to figure 1, wherein some of the components of the buckle have been removed for illustrative purposes; and
- figures 6 to 8 are perspective views of a buckle with tongues and components of a known type.

### Detailed description

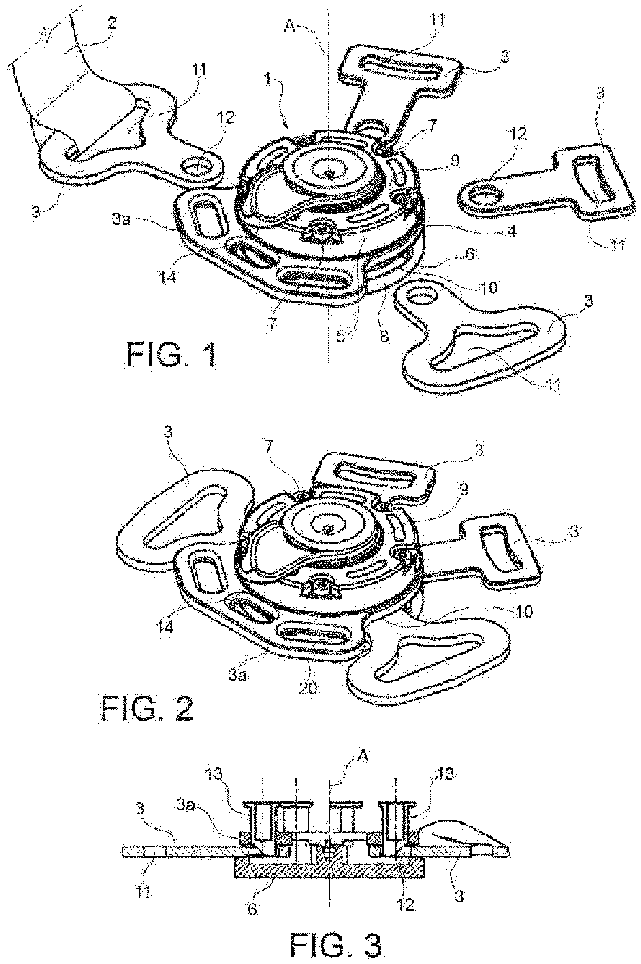

Referring to the figures, a safety belt, particularly for sports cars or other racing vehicles, comprises a buckle 1 and a plurality of belt straps 2, for example, six belt straps. In the figures, only one belt strap 2 is illustrated in figure 1. Each belt strap generally has an end part with a tongue 3, adapted to be attached to the buckle 1.

The buckle 1 comprises a casing 4 in this cylindrical drum-shaped example, defining an axis A with a cup-shaped body 5 and a base 6, coupled together by means of screws 7.

The casing may have a side surface 8 substantially cylindrical in this example, and a front surface 9 orthogonal to the axis A. The side surface 8 of the casing has a plurality of slots 10 not angularly equidistant around the axis A and intended, in use, to receive a respective tongue of the safety belt straps.

Throughout the present description and the claims, the terms and expressions indicating positions and orientations, such as "longitudinal", "radial", "tangential", refer to the central and longitudinal axis A.

Each tongue 3, in a manner known per se, is formed of a shaped metal plate having one or more through openings 11 in a radially outer position for passing a strap of the safety belt through them and a through hole 12 defined in a position that in use is radially more internal or central, i.e. closer to the axis A of the buckle. Each through hole 12 serves to allow the passage of a respective longitudinal retaining pin 13.

The buckle 1 has a locking and release mechanism, of a kind known per se, which serves to hold releasably the tongues of the safety belt. The manufacturing and operational features of the locking and release mechanism are not per se relevant to the understanding of the invention, therefore they will not be described in detail herein. It is sufficient to note here that the locking and release mechanism comprises a release control member 14, for example a release lever 14 hinged to the front surface 9 of the casing, and a plurality of releasable retaining pins 13 adapted to lock the tongues 3. The releasable retaining pins 13 extend parallel to the longitudinal direction of the axis A.

The release lever 14 in the present example is adapted to rotate around the axis A along a trajectory lying in a plane of movement orthogonal to the axis A. The rotation of the release lever 14 causes the simultaneous release of all the releasable retaining pins 13 from the tongues 3, except for one fixed retaining element 13a, in this example, a fixed retaining pin. The fixed retaining element 13a permanently holds the fixed strap of the safety belt locked to the buckle and is not releasable by the release lever 14. Therefore, the tongue 3a of the fixed strap of the belt is here defined as a fixed tongue. The term "fixed tongue" is intended herein to indicate that the tongue 3a is locked to the buckle in a non-releasable manner by means of the locking and release mechanism.

The fixed tongue 3a is integral to a conventional annular retaining disc, indicated at 15 in figures 6 to 8 and discussed in the introduction of the description. The tongue 3a of the fixed strap is made of a single piece in the form of a shaped plate, preferably of metallic material or other rigid material, and has:
- at least one through opening 20 for the passage of at least one belt strap, and
- a plurality of through holes 21 for the passage of a respective plurality of releasable retaining pins 13 of the buckle. At least some of the pins received in the through holes 21 are releasable retaining pins 13 which are used to attach the respective tongues 3 of the belt and pass through the respective through holes 12 of the tongues 3. The tongue 3a of the thigh strap also forms at least one through hole 21a for the passage of the fixed pin 13a.

According to the invention, the fixed tongue 3a of the fixed strap has at least two through openings 20, each adapted to receive a respective length of the fixed strap of the safety belt. In the illustrated example, there are provided three adjacent or consecutive through openings 20 in a circumferential direction with respect to axis A.

The through hole 21a receiving the fixed retaining pin 13a, which is not operable by the buckle release mechanism, is preferably located adjacent to or near at least one of the through openings 20 for the fixed strap or straps of the safety belt.

According to the invention, the through openings 20 are elongated in tangential directions with respect to the axis A.

The tongue 3a of the fixed strap has a central opening 27, for example of a circular shape, adapted to allow the passage of a conventional longitudinal member (not shown) on which the release lever 14 is rotatably mounted.

In the illustrated embodiment, the tongue 3a of the fixed strap has five through holes 21 spaced circumferentially around the axis A. The number of through holes 21 as well as the number of tongues 3 are not to be considered limiting.

As illustrated, the through holes 21 may be distributed around the central opening 27. When the safety belt is in the locked condition, with the various tongues 3 inserted into the slots 10, the tongues 3 are circumferentially arranged adjacent on one of the two sides of the tongue 3a, so that the releasable retaining pins 13 pass both through the through holes 12 of the tongues 3 and through the through holes 21 of the tongue 3a of the thigh strap.

The tongue 3a of the fixed strap may have one or more further through holes 22, preferably a plurality of further through holes 22 distributed circumferentially spaced from each other, adapted to receive one or more of the respective retaining elements 7 which are not releasable by actuating the release mechanism of the tongues. In the present example, the retaining elements 7 may be screws or other fastening elements (e.g. rivets) used to hold together the cup-shaped body 5 and the base 6 of the casing 4 of the buckle. The retaining elements 7 pass through the further through holes 22 and thus help to lock the fixed tongue 3a to the casing 4 of the buckle.

In the example shown here, the fixed tongue 3a is attached to the casing 4 of the buckle either by means of the fixed retention pin 13a, which passes through the through hole 21a of the fixed tongue, or by the screws 7 which pass through the through holes 22 of the fixed tongue. The screws 7 therefore perform a double action: an action of holding the fixed tongue 3a stable and a function of assembling the casing 4 of the buckle.

According to an alternative embodiment (not shown), the fixed retaining pin 13a may be omitted, and the permanent retaining action of the fixed tongue 3a may be transferred exclusively to at least one of the retaining elements 7 (e.g. screws) and preferably to more than one of the retaining elements 7.

If, as in the example shown in the drawings, a fixed retaining pin 13a is provided, the additional retaining action provided by the screws 7 is not indispensable. According to a further alternative embodiment (not shown), the screws 7 may be omitted, for example, if the casing 4 is assembled via fastening means other than screws or rivets. Alternatively, the screws 7 (or other fastening means of the casing 4) may be arranged externally or around the fixed tongue 3a without engaging it and without going through the holes made in it.

Preferably, the tongue 3a of the fixed strap has a contour at least partially corresponding or coincident with the contour of the buckle casing.

Several aspects and embodiments of the buckle and safety belt have been described. It is understood that each embodiment may be combined with any other embodiment. The invention, moreover, is not limited to the described embodiments, but may be varied within the scope defined by the appended claims.

## Claims

1. A safety belt, particularly for racing vehicles, comprising:
a plurality of tongues (3) each attachable to a respective belt strap (2), each tongue (3) having at least one through hole (12) for the passage of a respective retaining pin (13) and at least one through opening (11) for the passage of a belt strap (2);
a buckle (1) for mutually locking and releasing the tongues (3), the buckle comprising:
a casing (4) having a plurality of slots (10) each adapted to receive one of the said tongues (3),
a locking and release mechanism for releasably retaining the tongues, the mechanism comprising a plurality of releasable retaining pins (13) adapted to releasably secure a respective plurality of said tongues (3) and a control member (14), adapted to cause release of the releasable retaining pins (13),
at least one fixed retaining element (13a, 7) for retaining at least one of the tongues, said fixed retaining element (13a, 7) not being releasable by the control member (14);
a fixed tongue (3a) for a fixed strap of the safety belt, the fixed tongue (3a) being made by a single piece of a shaped plate which forms at least one through opening (20) for the passage of at least one strap of the belt and at least one through hole (21a, 22) for the passage of the fixed retaining element (13a, 7);
the fixed tongue (3a) further forming a plurality of through holes (21) for the
passage of a respective plurality of releasable retaining pins (13) of the buckle; **characterized in that**
the fixed tongue (3a) forms at least two of said through openings (20), which are adjacent or consecutive in a circumferential direction with respect to a substantially central axis (A) which is perpendicular to a geometrical plane wherein the fixed tongue (3a) lies;
that the through openings (20) are elongated in tangential directions with respect to the axis (A), and that
the fixed tongue (3a) forms a substantially central opening (27).

2. A safety belt according to claim 1, wherein the through holes (21, 21a) of the fixed tongue (3a) are distributed around a substantially central opening (27).

3. A safety belt according to claim 1 or 2, wherein the tongue (3a) of the fixed strap has a contour coinciding at least partly with a contour of the casing (4) of the buckle.

4. A safety belt according to any one of the preceding claims, wherein the safety belt is able to take a locking condition, in which the tongues (3) are inserted into the slots (10), the through holes (21) of the fixed tongue (3a) are aligned parallel to a given direction (A) with respective through holes (12) of the tongues (3), and each of the releasable retaining pins (13) is received in one of the through holes (21) of the fixed tongue (3a) and in one of the through holes (12) of the tongues (3).

5. A safety belt according to any one of the preceding claims, wherein said at least one fixed retaining element (7) is a fastening element (7) for assembling the buckle casing (4), and the tongue (3a) of the fixed strap provides at least one further through hole (22) for receiving said at least one fastening element (7).

6. A safety belt according to claim 5, comprising a plurality of fixed retaining elements (7) which comprise a plurality of fastening elements (7) for assembling the buckle casing (4), the tongue (3a) of the fixed strap providing a plurality of further through holes (22) circumferentially spaced from one another, each for receiving a respective one of said fastening elements (7).

7. A safety belt according to any one of the preceding claims, wherein said at least one fixed retaining element (13a) is a fixed retaining pin which is parallel to the releasable retaining pins (13, and wherein the releasable retaining pins (13) and the fixed retaining pin (13a) are circumferentially spaced from one another.

## Patentansprüche

1. Sicherheitsgurt, insbesondere für Rennfahrzeuge, umfassend:
eine Mehrzahl von Zungen (3), die jeweils an einem jeweiligen Gurtband (2) anbringbar sind, wobei jede Zunge (3) zumindest ein Durchgangsloch (12) für den Durchtritt eines jeweiligen Rückhaltestifts (13) und zumindest eine Durchgangsöffnung (11) für den Durchtritt eines Gurtbandes (2) aufweist;
eine Schnalle bzw. ein Gurtschloss (1) zum gegenseitigen Verriegeln und Lösen der Zungen (3), wobei das Gurtschloss umfasst:
ein Gehäuse (4) mit einer Mehrzahl von Schlitzen (10), die jeweils angepasst sind, einer der Zungen (3) aufzunehmen,
einen Verriegelungs- und Lösemechanismus zum lösbaren Zurückhalten der Zungen, wobei der Mechanismus eine Mehrzahl von lösbaren Rückhaltestiften (13), die angepasst sind, eine jeweilige Mehrzahl der Zungen (3) lösbar zu befestigen, und ein Steuer- bzw. Kontrollglied (14) umfasst, das angepasst ist, ein Lösen der lösbaren Rückhaltestifte (13) zu bewirken,
zumindest ein festes Rückhalteelement (13a, 7) zum Zurückhalten von zumindest einer der Zungen, wobei das feste Rückhalteelement (13a, 7) nicht durch das Steuerglied (14) lösbar ist;
eine feste Zunge (3a) für ein festes Band des Sicherheitsgurtes, wobei die feste Zunge (3a) aus einem einzigen Stück einer Formplatte besteht, die zumindest eine Durchgangsöffnung (20) für den Durchtritt zumindest eines Bands des Gurts und zumindest ein Durchgangsloch (21a, 22) für den Durchtritt des festen Rückhalteelements (13a, 7) bildet;
wobei die feste Zunge (3a) ferner eine Mehrzahl von Durchgangslöchern (21) für den Durchtritt einer jeweiligen Mehrzahl von lösbaren Rückhaltestiften (13) des Gurtschlosses bildet;
**dadurch gekennzeichnet, dass**
die feste Zunge (3a) zumindest zwei der Durchgangsöffnungen (20) bildet, die in einer Umfangsrichtung in Bezug auf eine im Wesentlichen zentrale Achse (A), die senkrecht zu einer geometrische Ebene ist, in der die feste Zunge (3a) liegt, angrenzend oder aufeinanderfolgend sind;
dass die Durchgangsöffnungen (20) in tangentialen Richtungen in Bezug auf die Achse (A) länglich sind, und dass
die feste Zunge (3a) eine im Wesentlichen zentrale Öffnung (27) bildet.

2. Sicherheitsgurt nach Anspruch 1, wobei die Durchgangsöffnungen (21, 21a) der festen Zunge (3a) um eine im Wesentlichen zentrale Öffnung (27) herum verteilt sind.

3. Sicherheitsgurt nach Anspruch 1 oder 2, wobei die Zunge(3a) des festen Bands eine Kontur aufweist, die zumindest teilweise mit einer Kontur des Gehäuses (4) des Gurtschlosses zusammenfällt.

4. Sicherheitsgurt nach einem der vorhergehenden Ansprüche, wobei der Sicherheitsgurt in der Lage ist, einen Verriegelungszustand einzunehmen, in dem die Zungen (3) in die Schlitze (10) eingesetzt sind, die Durchgangslöcher (21) der festen Zunge (3a) parallel zu einer gegebenen Richtung (A) mit jeweiligen Durchgangslöchern (12) der Zungen (3) ausgerichtet sind, und jeder der lösbaren Rückhaltestifte (13) in einem der Durchgangslöcher (21) der festen Zunge (3a) und in einem der Durchgangslöcher (12) der Zungen (3) aufgenommen ist.

5. Sicherheitsgurt nach einem der vorhergehenden Ansprüche, wobei das zumindest eine feste Rückhalteelement (7) ein Befestigungselement (7) zum Zusammenbauen des Gurtschlossgehäuses (4) ist und die Zunge (3a) des festen Bands zumindest ein weiteres Durchgangsloch (22) zum Aufnehmen des zumindest einen Befestigungselements (7) bereitstellt.

6. Sicherheitsgurt nach Anspruch 5, umfassend eine Mehrzahl von festen Rückhalteelementen (7), die eine Mehrzahl von Befestigungselementen (7) zum Zusammenbauen des Gurtschlossgehäuses (4) umfassen, wobei die Zunge (3a) des festen Bands eine Mehrzahl von weiteren Durchgangslöchern (22) bereitstellt, die in Umfangsrichtung bzw. umfangsmäßig voneinander beabstandet sind, jeweils zum Aufnehmen eines jeweiligen einen der Befestigungselemente (7).

7. Sicherheitsgurt nach einem der vorhergehenden Ansprüche, wobei das zumindest eine feste Rückhalteelement (13a) ein fester Rückhaltestift ist, der parallel zu den lösbaren Rückhaltestiften (13) ist, und wobei die lösbaren Rückhaltestifte (13) und der feste Rückhaltestift (13a) in Umfangsrichtung bzw. umfangsmäßig voneinander beabstandet sind.

## Revendications

1. Ceinture de sécurité, en particulier pour des voitures de course, comprenant :
une pluralité de languettes (3) pouvant chacune être fixée à une sangle de ceinture respective (2), chaque languette (3) ayant au moins un orifice traversant (12) pour le passage d'une tige de retenue (13) respective et au moins une ouverture traversante (11) pour le passage d'une sangle de ceinture (2) ;
une boucle (1) permettant le verrouillage mutuel et la libération des languettes (3), la boucle comprenant :
un boîtier (4) ayant une pluralité de fentes (10) chacune adaptée pour recevoir une desdites languettes (3),
un mécanisme de verrouillage et de libération pour retenir de manière libérable les languettes, le mécanisme comprenant une pluralité de tiges de retenue libérables (13) adaptée pour fixer de manière libérable une pluralité respective desdites languettes (3) et un élément de commande (14), adapté pour provoquer la libération des tiges de retenue libérables (13),
au moins un élément de retenue fixe (13a, 7) pour retenir au moins une des languettes, ledit élément de retenue fixe (13a, 7) ne pouvant pas être libéré par l'élément de commande (14) ;
une languette fixe (3a) pour une sangle fixe de la ceinture de sécurité, la languette fixe (3a) étant faite d'une seule pièce d'une plaque façonnée qui forme au moins une ouverture traversante (20) pour le passage d'au moins une sangle de la ceinture et au moins un orifice traversant (21a, 22) pour le passage de l'élément de retenue fixe (13a, 7) ;
la languette fixe (3a) formant en outre une pluralité d'orifices traversants (21) pour le passage d'une pluralité respective de tiges de retenue libérables (13) de la boucle ;
**caractérisée en ce que**
la languette fixe (3a) forme au moins deux desdites ouvertures traversantes (20), qui sont adjacentes ou consécutives dans une direction circonférentielle par rapport à un axe sensiblement central (A) qui est perpendiculaire à un plan géométrique dans lequel se trouve la languette fixe (3a) ;
les ouvertures traversantes (20) sont allongées dans des directions tangentielles par rapport à l'axe (A), et
la languette fixe (3a) forme une ouverture sensiblement centrale (27).

2. Ceinture de sécurité selon la revendication 1, dans laquelle les orifices traversants (21, 21a) de la languette fixe (3a) sont répartis autour d'une ouverture sensiblement centrale (27).

3. Ceinture de sécurité selon la revendication 1 ou 2, dans laquelle la languette (3a) de la sangle fixe présente un contour qui coïncide au moins partiellement au contour du boîtier (4) de la boucle.

4. Ceinture de sécurité selon l'une quelconque des revendications précédentes, dans laquelle la ceinture de sécurité peut passer dans un état de verrouillage, dans lequel les languettes (3) sont insérées dans les fentes (10), les orifices traversants (21) de la languette fixe (3a) sont alignés parallèlement à une direction donnée (A) avec les orifices traversants (12) respectifs des languettes (3), et chacune des tiges de retenue libérales (13) est reçue dans un des orifices traversants (21) de la languette fixe (3a) et dans un des orifices traversants (12) des languettes (3).

5. Ceinture de sécurité selon l'une quelconque des revendications précédentes, dans laquelle ledit au moins un élément de retenue fixe (7) est un élément de fixation (7) destiné à assembler le boîtier de boucle (4), et la languette (3a) de la sangle fixe présente au moins un autre orifice traversant (22) destiné à recevoir ledit au moins un élément de fixation (7).

6. Ceinture de sécurité selon la revendication 5, comprenant une pluralité d'éléments de retenue fixes (7) qui comprennent une pluralité d'éléments de fixation (7) destinés à assembler le boîtier de boucle (4), la languette (3a) de la sangle fixe présentant une pluralité d'autres orifices traversants (22) espacés circonférentiellement les uns des autres, chacun pour recevoir un respectif desdits éléments de fixation (7).

7. Ceinture de sécurité selon l'une quelconque des revendications précédentes, dans laquelle ledit au moins un élément de retenue fixe (13a) est une tige de retenue fixe qui est parallèle aux tiges de retenue libérables (13), et dans laquelle les tiges de retenue libérables (13) et la tige de retenue fixe (13a) sont espacées circonférentiellement les unes des autres.
